# EUROPÄISCHE PATENTSCHRIFT

(11) **EP 3 088 121 B1**
(45) Veröffentlichungstag und Bekanntmachung des Hinweises auf die Patenterteilung: **18.07.2018**
(21) Anmeldenummer: 15001270.6
(22) Anmeldetag: 29.04.2015
(51) Int. Cl.: B23K 26/00, B29C 65/64, B29C 65/00, B23K 103/04, B23K 103/10, B23K 103/14, B23K 103/00, B23K 103/08

(54) **METALLBAUTEIL MIT ZUMINDEST EINEM MULTIDIMENSIONAL STRUKTURIERTEN VERBINDUNGSABSCHNITT SOWIE VERFAHREN ZU DESSEN HERSTELLUNG**
METAL COMPONENT CONTAINING AT LEAST ONE OF MULTIDIMENSIONAL STRUCTURED CONNECTION SECTION AND METHOD FOR THE PRODUCTION THEREOF
COMPOSANT MÉTALLIQUE AYANT AU MOINS UNE SECTION DE LIAISON STRUCTURÉE MULTIDIMENSIONNELLE ET SON PROCÉDÉ DE PRODUCTION

(43) Veröffentlichungstag der Anmeldung: 02.11.2016
(60) Teilanmeldung: 18157224.9
(73) Patentinhaber: Airbus Defence and Space GmbH, 85521 Ottobrunn (DE)
(72) Erfinder: Jürgens, Michael, 80797 München (DE); Mertens, Tobias, 81671 München (DE)
(74) Vertreter: Isarpatent

(56) Entgegenhaltungen:
- DE-A1-102009 017 776
- JP-A- 2009 061 648
- US-A1- 2012 207 974
- US-A1- 2012 207 982

## Beschreibung

Die vorliegende Erfindung betrifft ein Verfahren zum multidimensionalen Strukturieren von zumindest einem Verbindungsabschnitt eines Metallbauteils und ein Metall- oder Keramikbauteil mit zumindest einem multidimensional strukturierten Verbindungsabschnitt, wobei der Verbindungsabschnitt zu einer adhäsiven Verbindung mit faserverstärktem Polymerlaminat vorgesehen ist.

Insbesondere in der Luft- und Raumfahrtindustrie, aber auch beim Bau von Wasser- und Landfahrzeugen sowie beim Bau von Rotoren von Windkraftanlagen und Leichtbau-Strukturen sind Faserverbundstrukturen nicht mehr wegzudenken. Das dabei eingesetzte faserverstärkte Polymerlaminat kann dabei Kohlefaser, Glasfaser, Kevlar, Borfaser oder Mischfasern oder Gewebe aus den vorgenannten Fasern enthalten. Die Polymermatrix wird dabei entweder durch "nasse" Epoxyharze, Polyesterharze, etc. gebildet oder es werden so genannte "Prepregs", welche Harz und Gewebefaser beinhalten verwendet. Dies liegt insbesondere an den nahezu unbegrenzten Gestaltungsmöglichkeiten und der enormen Gewichtseinsparung im Vergleich zu metallischen oder keramischen Werkstoffen. Durch entsprechende Ausrichtung oder Materialwahl der Faserrovings oder Fasermatten, d.h. beispielsweise einem Mix aus Kohlefaser und Glasfaser oder Kohlefaser und Keflar, wobei eine Faserart in der einen Richtung und die andere Faserart in der anderen Richtung oder eine Faserart innen und die andere Faserart außen verwendet wird, können aus Faserverbundmaterial konstruierte Bauteile Kräfte optimal in der vorberechneten Weise aufnehmen, d.h. sie sind optimal an die erwarteten Belastungen angepasst und können allein hierdurch zu einer deutlichen Gewichtsreduktion beitragen. Schwachstelle von Faserverbundstrukturen ist jedoch ihr geringer Delaminationswiderstand bzw. die Klebefestigkeit von Verbindungen aus genau dieser Werkstoffgruppe. Schlagartige, hohe Initialbelastungen können interlaminare Rissinitiierung provozieren, dem Rissfortschritt unter vergleichsweise geringem Energiebedarf folgt.

Insbesondere aus dem Flugzeug und Schiffsbau aber auch aus dem Fahrzeugbau ist es bekannt, Kohlefaserkunststoff bzw. CFK-Hautschalen mit CFK- Stringern, CFK-Spanten, metallischen Spanten und ähnlichen Strukturbauteilen zu versteifen, um den hohen Belastungen im Hauptschalenbereich gewichtsoptimiert zu widerstehen. Derartige Bauteile können beispielsweise durch Prepregtechnologie, Thermosetverfahren oder Vakuuminfusionsverfahren zum Einbringen einer Matrix, beispielsweise eines Epoxidharzes, in Verstärkungsfasern und nachfolgendes Aushärten in einem Ofen oder Autoklaven hergestellt werden. Ein Faserverbundbauteil ist zum Beispiel aus Verstärkungsfasern, sei es Rovings oder Gewebematten, aufgebaut. Strukturelle Fügestellen, welche eine bestimmte Schadenstoleranz aufweisen sollen, können mit dünnen Metallblechen zwischen Stoßflächen versehen werden, wobei durch die Materialdicke des Metallblechs dem Faserverbundbauteil eine Querverstärkung hinzugefügt wird. Es wurden verschiedene Verbundtechnologien entwickelt, um die Eigenschaften in Querrichtung zu verbessern, wie beispielsweise Z-Pinning, Heften oder Tuften.

Ferner sind Co-bonding-Verfahren bekannt, bei denen in einem ersten Schritt ein Faserverbundfügepartner unter Vakuum aushärtet und dann in einem zweiten Schritt der ausgehärtete erste Fügepartner mit einem "frischen" Fügepartner integriert verbunden und ausgehärtet wird. Beispielsweise kann dies im Bereich des Flugzeugbaus eine ausgehärtete Längsverstärkung (Stringer) sein, die mit der "nassen" Hautschale des unteren Rumpfbereichs einer Flugzeugstruktur verbunden wird.

Ferner gibt es auch Hybridbauteile, die aus einer Kombination von Metall- oder Keramikbauteilen mit einem Polymerlaminat aufgebaut sind und an verschiedenen Stellen im Bereich eines Luft- oder Raumfahrzeugs oder eines Land-oder Wasserfahrzeugs angeordnet sein können.

Dokument WO2011/069899 A2 betrifft ein Verfahren zum Anbinden eines Faserverbundbauteils an ein Strukturbauteil eines Luft- und Raumfahrzeuges. Dabei wird eine Metallfolie als Querverstärkungselement zwischen dem Faserverbundbauteil und dem Strukturbauteil vorgesehen. Sie wird mit mindestens einem Verankerungsabschnitt, welcher von der dem Faserverbundbauteil zugewandten Oberfläche im 90° Winkel hervorsteht ausgebildet und zwischen das Faserverbundbauteil und dem Strukturbauteil eingefügt und darin integriert. Ferner wird eine entsprechende Anordnung nach diesem Verfahren hergestellt. Hierdurch kann bereits ein verbesserter Delaminationswiderstand erzielt werden, der bei Verwendung einer Titanfolie als Querverstärkungselement bei ca. 1,5 kJ/m² liegt.

Ferner beschreibt die US 2012/207982 A1 einen Verbundformkörper mit einem Metallelement und einem faserverstärkten Polymermaterialabschnitt.

Daher liegt der vorliegenden Erfindung das technische Problem zugrunde, die Nachteile des Standes der Technik zu vermeiden und eine Verbesserung der Klebeverbindungen von Faserverbundstrukturen mit metallischen oder keramischen Bauteilen zu schaffen, um den Delaminationswiderstand bzw. die Klebefestigkeit zu erhöhen. Dies betrifft insbesondere auch die Verbindung von Faserverbundstrukturen mit Faserverbundstrukturen mittels metallischer oder keramischer Zwischenlage. Ferner sollen mögliche die Klebefestigkeit negativ beeinflussende Kontaminationen des metallischen oder keramischen Bauteils beseitigt werden.

Diese Aufgabe wird durch ein Verfahren mit den Merkmalen des Anspruchs 1 sowie ein Metallbauteil mit den Merkmalen des Anspruchs 6 gelöst. Vorteilhafte Ausbildungsformen und Weiterbildungen der Erfindung werden in den Unteransprüchen beschrieben.

Hierdurch werden die Nachteile des Standes der Technik vermieden und eine Verbesserung der Klebeverbindungen von Faserverbundstrukturen mit metallischen oder keramischen Bauteilen geschaffen und der Delaminationswiderstand bzw. die Klebefestigkeit erhöht. Der Delaminationswiderstand lässt sich durch die Erfindung gegenüber einer nur milliskalierten Struktur um mehr als 30% vergrößern. Dies betrifft insbesondere auch die Verbindung von Faserverbundstrukturen mit Faserverbundstrukturen mittels metallischer oder keramischer Zwischenlage. Ferner werden durch das erfindungsgemäße Verfahren mögliche die Klebefestigkeit negativ beeinflussende Kontaminationen des metallischen oder keramischen Bauteils beseitigt.

Das erfindungsgemäße Verfahren zum multidimensionalen Strukturieren von zumindest einem Verbindungsabschnitt eines Metallbauteils, wobei der Verbindungsabschnitt zu einer adhäsiven Verbindung mit faserverstärktem Polymerlaminat vorgesehen ist, umfasst dabei folgende Schritte:
1.) Erzeugen einer milliskalierten Struktur, d.h. einer Makrostruktur mit Dimensionen größer 1000µm, durch Ausbilden von Verankerungselementen an dem Verbindungsabschnitt;
2.) Erzeugen einer mikroskalierten Struktur, d.h. einer Mikrostruktur mit Dimensionen zwischen 1µm und 1000µm, auf dem Verbindungsabschnitt und den Verankerungselementen;
3.) Erzeugen einer nanoskalierten Struktur, d.h. einer Nanostruktur mit Dimensionen kleiner 1µm, über der mikroskalierten Struktur auf dem Verbindungsabschnitt und den Verankerungselementen.

Bei einer Ausführungsform erfolgen die Verfahrensschritte vorzugsweise in dieser Reihenfolge. Hierdurch wird eine von der Nanostruktur überlagerte Mikrostruktur auf dem milliskalierten Verbindungsabschnitt mit Verankerungselementen geschaffen. Dabei steht das zumindest eine Verankerungselement im Wesentlichen senkrecht oder in einem vorbestimmten Winkel von dem Verbindungsabschnitt hervor. Auch können die Verankerungselemente als Pins, Widerhaken, Verzahnungen, Spitzen, Helixstrukturen, etc. ausgebildet sein. Vorteilhafterweise sind die Verankerungselemente einstückig mit dem Verbindungsabschnitt ausgebildet.

Durch das erfindungsgemäße Verfahren wird auf dem Metallbauteil eine neue Oberflächentopographie erzeugt. Diese Strukturen ermöglichen eine deutlich verbesserte mechanische Verankerung mit dem umgebenden Polymer und/oder eine höhere Anzahl sich ausbildender kovalenter Bindungen. Die auf diese Weise verstärkten Faserverbundlaminate bzw. -verbindungen weisen als Konsequenz einen signifikant erhöhten Delaminationswiderstand gegenüber bekannten Faserverbundlaminaten auf und führen somit zu einer erhöhten Lebensdauer der betroffenen Faserverbundbauteile.

Das Erzeugen der milliskalierten Struktur erfolgt durch Ausbilden von Verankerungselementen an dem Verbindungsabschnitt mittels Stanzbiegeverfahren, Hochgeschwindigkeits-Metallzerspanen, Elektronenstrahlbearbeitung, Additiv-Schicht-Herstellungsverfahren, Auftragsschweißen, Anschweißen von Verankerungselementen oder anderen geeigneten Verfahren.

Das Erzeugen der mikroskalierten Struktur auf dem Verbindungsabschnitt und den Verankerungselementen erfolgt mittels Sandstrahlen oder elektromagnetischer Strahlung, insbesondere Laserstrahlung. Hierdurch können auch Verunreinigungen der Struktur beseitigt werden. Auf diese Weise kann eine verbesserte Kontakt- und Klebefläche geschaffen werden.

Eine weitere vorteilhafte Weiterbildung des Verfahrens sieht vor, dass das Erzeugen einer nanoskalierten Struktur über der mikroskalierten Struktur auf dem Verbindungsabschnitt und den Verankerungselementen mittels Laserbestrahlen oder Anodisieren erfolgt. Insbesondere die Überlagerung der mikroskalierten Struktur durch die nanoskalierte Struktur fördert eine optimale Fügefläche der Verbundstruktur.

Eine weitere vorteilhafte Weiterbildung des Verfahrens sieht vor, dass die Laserbestrahlung mittels einem Kurzpulslaser, insbesondere einem Femto-, Piko- oder Nanosekunden-Laser mit einer hohen Pulsfolgenfrequenz erfolgt, der mit einem definierten Vorschub relativ zu dem Verbindungsabschnitt verfahren wird. Dabei sind die Vorschubgeschwindigkeit und der Vorschubweg durch die Art der Bearbeitung - Mikroskalierung oder Nanoskalierung - definiert.

Noch eine weitere vorteilhafte Weiterbildung des Verfahrens sieht vor, dass der Laser zum Erzeugen der mikroskalierten Struktur und der Laser zum Erzeugen der nanoskalierten Struktur derart hintereinander angeordnet sind, dass die Nanostruktur überlagerte Mikrostruktur in einem Vorschub-Durchlauf erzeugt wird. Hierdurch kann der Fertigungsablauf optimiert und beschleunigt werden.

Das erfindungsgemäße Metallbauteil mit zumindest einem multidimensional strukturieren Verbindungsabschnitt, sieht einen Verbindungsabschnitt zu einer adhäsiven Verbindung mit faserverstärktem Polymerlaminat vor, der eine milliskalierte Struktur, insbesondere ausgebildet durch Verankerungselementen, und eine mikroskalierte Struktur auf dem Verbindungsabschnitt und den Verankerungselementen aufweist, die von einer weiteren nanoskalierten Struktur überlagert ist. Dies ermöglicht eine wirkungsvolle Verstärkung und dreidimensionale mechanische Verankerung des Metall- oder Keramikbauteils mit einer Polymerfaserverbundstruktur und eine höhere Anzahl sich ausbildender kovalenter Bindungen.

Bei den verwendeten Metallen kann es sich um Titanlegierungen, Aluminiumlegierungen, Edelstahllegierungen, Magnesium, oder ähnliches handeln.

Eine vorteilhafte Ausführungsform des erfindungsgemäßen Metallbauteils sieht vor, dass allseitig Verbindungsabschnitte vorgesehen sind. Bei plattenförmigen Metallbauteilen stehen die Verbindungselemente dann in Z-Richtung hervor.

Eine vorteilhafte Ausführungsform des erfindungsgemäßen Metallbauteils sieht vor, dass das Bauteil aus einer Titan-, Aluminium-, Stahl-, beispielsweise Edelstahl, Magnesium-Legierung oder einer anderen Metalllegierung hergestellt ist.

Ferner sieht die Erfindung die Verwendung eines erfindungsgemäßen Metallbauteils als Z-Verstärkung von faserverstärkten Polymerlaminaten vor. Dabei kann das Metallbauteil vollständig von Polymerlaminat umgeben sein.

Ferner kann das erfindungsgemäß hergestellte Metallbauteil als Verbindungselement in einem Co-Bonding-Verfahren vorgesehen sein. Hier wird nach dem Aushärten der Klebeverbindung des Metall- oder Keramikbauteils mit dem ersten Fügepartners unter Vakuum in einem Autoklaven im nächsten Schritt mit einem nass zu klebenden zweiten Fügepartner geklebt.

Weitere, die Erfindung verbessernde Maßnahmen werden nachstehend anhand von Beispielen und den beigefügten Figuren näher dargestellt. Es zeigen:
- Figur 1: Ein Flussdiagram mit den erfindungsgemäßen Verfahrensschritten;
- Figur 2a-2d: ein Metallbauteil mit multidimensional strukturiertem Verbindungsabschnitt;
- Figur 3: eine Explosionsansicht einer Faserverbundstruktur mit Verstärkungsplatte; und
- Figur 4: eine Seitenansicht der Faserverbundstruktur aus Figur 3 in verklebtem Zustand.

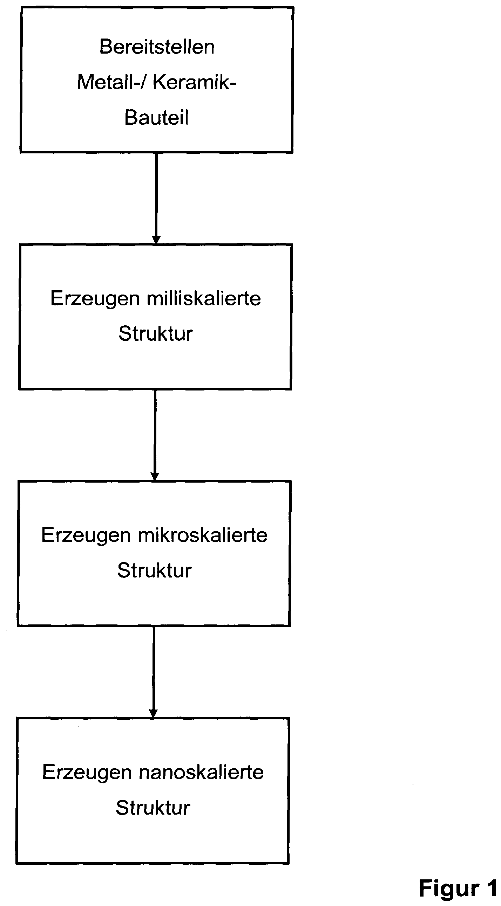

Figur 1 zeigt die Verfahrensschritte in der Reihenfolge des Verfahrensablaufs. Dabei wird zunächst ein Metallbauteil bereitgestellt, welches sowohl ein dünnes Metallblech aber auch ein massiver Metallkörper sein kann. Danach erfolgt die Erzeugung einer milliskalierten Struktur auf diesem Bauteil. Hierdurch werden Verankerungselemente auf dem ganzen Metallbauteil oder auf Teilbereichen desselben geschaffen. Dabei kann das zumindest eine Verankerungselement im Wesentlichen senkrecht oder in einem vorbestimmten Winkel von dem Verbindungsabschnitt hervorstehen. Auch können die Verankerungselemente als Pins, Widerhaken, Verzahnungen, Spitzen, Helixstrukturen, etc. ausgebildet sein. Vorteilhafterweise sind die Verankerungselemente einstückig mit dem Verbindungsabschnitt ausgebildet

Dabei wird die konkrete Art der Erzeugung der milliskalierten Struktur maßgeblich durch die Materialstärke und Materialart des Metallbauteils beeinflusst. Die Verbindungsabschnitte können mittels Stanzbiegeverfahren, Hochgeschwindigkeits-Metallzerspanen, Elektronenstrahlbearbeitung, Additiv-Schicht-Herstellungsverfahren, Auftragsschweißen, Anschweißen von Verankerungselementen oder andere geeignete Verfahren erfolgen.
Der nächste Schritt des Erzeugens der mikroskalierten Struktur auf dem Metallbauteil inklusive der darauf ausgestalteten Millistruktur, erfolgt beispielsweise mittels Sandstrahlen oder elektromagnetischer Strahlung, insbesondere Laserbestrahlung.

Schließlich erfolgt als weiterer Schritt das Erzeugen einer nanoskalierten Struktur über der mikroskalierten Struktur auf dem Verbindungsabschnitt und den Verankerungselementen mittels Laserbestrahlen oder auch mittels Anodisieren. Nachfolgend wird das Verfahren anhand von Ausführungsbeispielen näher beschrieben.

### Beispiel 1:

Beispielhaft kann ein erstes Verfahren zum multidimensionalen Strukturieren von zumindest einem Verbindungsabschnitt eines Metallbauteils in folgender Weise ablaufen:
1. Konsekutives Stanzen und Umformen eines Titanbleches, beispielsweise Ti15V3Al3Cr3Sn mit einer Blechdicke t=0,4 mm, zum Erzeugen einer milliskalierten Struktur;
2. Sandstrahlen des Titanbleches, beispielsweise mit Al2O3 oder SiO2 mit einer Korngröße von 250µm - 500µm und einem Strahldruck von 7 bar, zum Erzeugen einer mikroskalierten Struktur;
3. Laserbestrahlen, beispielsweise mit einer Wellenlänge von 1064 nm, einer Pulsdauer kleiner 20ns, einer Geschwindigkeit von 800 mm/s, einem Strom von 43 A, einer Frequenz von 10 kHz und einfacher Wiederholung, zum Erzeugen einer nanoskalierten Struktur.

### Beispiel 2:

Beispielhaft kann ein zweites Verfahren zum multidimensionalen Strukturieren von zumindest einem Verbindungsabschnitt eines Metallbauteils in folgender Weise ablaufen:
1. Konsekutives Stanzen und Umformen eines Titanbleches, beispielsweise Ti15V3Al3Cr3Sn mit einer Blechdicke t=0,4 mm, zum Erzeugen einer milliskalierten Struktur;
2. Lasermikrostrukturierung, beispielsweise mit einer Wellenlänge von 1064 nm, einer Pulsdauer kleiner 20ns, einer Geschwindigkeit von 800 mm/s, einem Strom von 20 - 150 A, einer Frequenz von 10 kHz und Überlappung größer 80%, zum Erzeugen einer mikroskalierten Struktur;
3. Laserbestrahlen, beispielsweise mit einer Wellenlänge von 1064 nm, einer Geschwindigkeit von 800 mm/s, einem Strom von 43 A, einer Frequenz von 10 kHz und einfacher Wiederholung, zum Erzeugen einer nanoskalierten Struktur.

Bei diesem zweiten Beispiel könnte der 2. und 3. Schritt in einem Durchlauf erfolgen, d.h. mit zumindest zwei Lasern, die in einer gemeinsamen Vorschubeinrichtung oder zwei getrennten Vorschubeinrichtungen hintereinander angeordnet sind und zusammen über dem Werkstück, hier dem Titanblech, verschoben werden.

### Beispiel 3:

Beispielhaft kann ein drittes Verfahren zum multidimensionalen Strukturieren von zumindest einem Verbindungsabschnitt eines Metallbauteils in folgender Weise ablaufen:
1. Konsekutives Stanzen und Umformen eines Titanbleches, beispielsweise Ti15V3Al3Cr3Sn mit einer Blechdicke t=0,4 mm, zum Erzeugen einer milliskalierten Struktur;
2. Lasermikrostrukturierung, beispielsweise mit einer Wellenlänge von 1064 nm, einer Geschwindigkeit von 800 mm/s, einem Strom von 20 - 150 A, einer Frequenz von 10 kHz und Überlappung größer 80%, zum Erzeugen einer mikroskalierten Struktur;
3. Anodisieren in einem Elektrolyt, beispielsweise aus Natriumhydroxid mit einer Konzentration zwischen 100-300 g/l Natrium, Natriumtartrat mit einer Konzentration von 20-200 g/l, einem Komplexbildner z.B. MGDA mit einer Konzentration von 1 - 200 g/l und weiteren Bestandteilen, zum Erzeugen einer nanoskalierten Struktur.

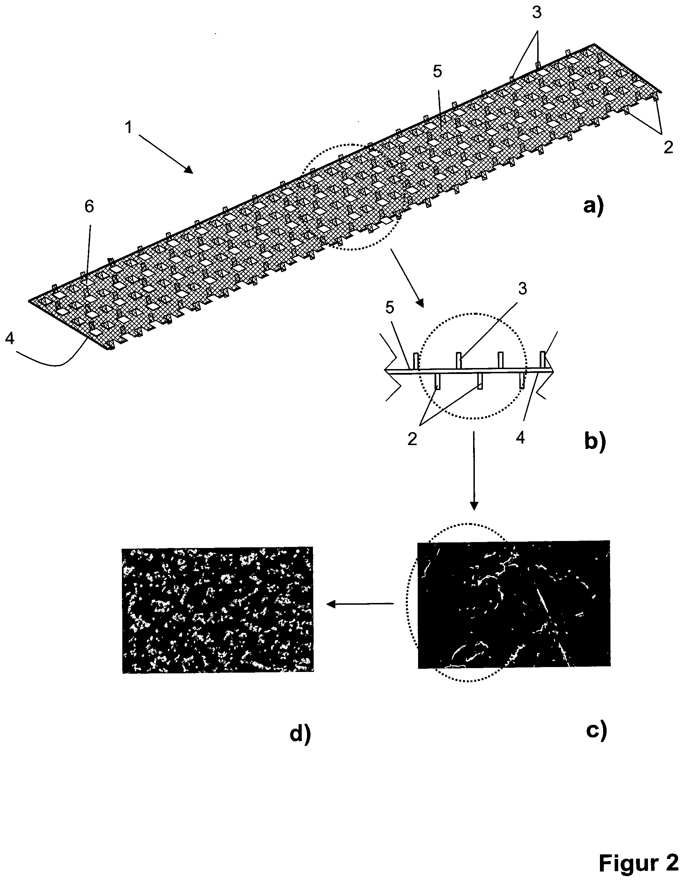

Figur 2a zeigt eine perspektivische Ansicht einer vorteilhaften Ausführungsform eines Metallbauteils 1 mit multidimensional strukturiertem Verbindungsabschnitt. Im vorliegenden Fall ist der Verbindungsabschnitt auf Ober- und Unterseite vorgesehen. Bei der vorliegenden Ausführungsform handelt es sich um ein konsekutiv gestanzt und umgeformtes Titanblech, beispielsweise Ti15V3Al3Cr3Sn mit einer Blechdicke t=0,4 mm, auf dem zunächst eine milliskalierte Struktur erzeugt wurde, d.h. eine Struktur im Bereich größer als 1 mm strukturiert. Dabei werden zunächst über das Titanblech regelmäßig verteilte Rechtecke an drei Seiten ausgestanzt und anschließend untere Verankerungselemente 2 von der Blechebene oder X-Y Ebene aus gesehen nach unten und obere Verankerungselemente 3 nach oben aus den gestanzten Bereichen senkrecht zur Ebene des Titanblechs herausgebogen, wie in der Seitenansicht in Figur 2b gezeigt. Dadurch entstehen im Blech rechteckige Aussparungen 6 und in Z-Achsenrichtung nach unten und oben hervorstehende Verankerungselemente. Sofern nur eine Seite des Bleches als Verankerung dienen soll, können entsprechende Verankerungselemente 2, 3 beispielsweise auch jeweils nur nach unten bzw. nur nach oben in Z-Achsenrichtung hervorstehend ausgebildet sein.

Ferner ist das Metallbauteil 1 mittels Sandstrahlen der Unterseite des Titanblechs bzw. des unteren Verbindungsabschnitts 4 und der Oberseite des Titanblechs bzw. des oberen Verbindungsabschnitts 5 und der darauf befindlichen oberen und unteren Verankerungselemente 2, 3 mikroskaliert, d.h. in einem Bereich größer 1 µm strukturiert. Im vorliegenden Ausführungsbeispiel Al2O3 mit einer Korngröße von 250-500 µm und einem Strahldruck von 7 bar zum Sandstrahlen verwendet. Die hierdurch erzeugte mikroskalierte Oberflächenstruktur ist vergrößert in Figur 2c gezeigt. Ein vergleichbares Ergebnis lässt sich durch eine Mikroskalierung mittels Laserbestrahlung erzielen.

Die mikroskalierte Struktur des Metallbauteils 1 wurde am Ende durch eine Nanoskalierung überlagert, die im vorliegenden Ausführungsbeispiel durch einen elektrochemischen Prozess erfolgte, wie beispielsweise eine Anodisierung mit einem Elektrolyt. Hierdurch wurde über der mikroskalierten Struktur eine Oberflächenstrukturierung in einem Bereich kleiner 0,1 µm geschaffen. Die hierdurch erzeugte mikroskalierte Oberflächenstruktur ist vergrößert in Figur 2d gezeigt. Ein vergleichbares Ergebnis lässt sich beispielsweise durch eine Mikroskalierung mittels Laserbestrahlung erzielen.

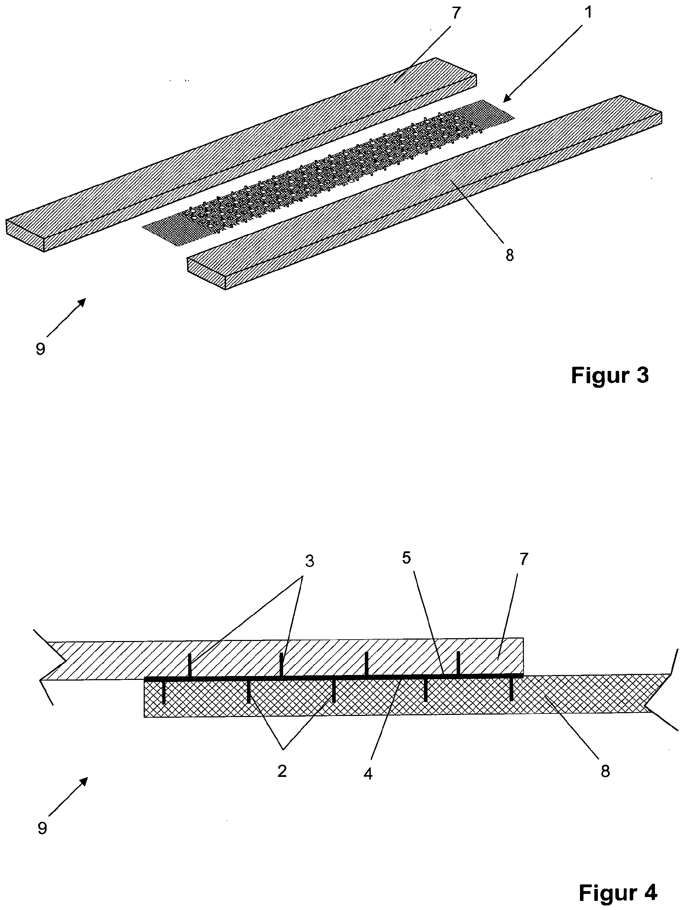

Figur 3 zeigt eine Explosionsansicht einer Faserverbundstruktur mit Verstärkungsplatte. Figur 4 zeigt eine Seitenansicht der Faserverbundstruktur aus Figur 3 in verklebtem Zustand. Dabei wird ein oberer Fügepartner 7 mit dem erfindungsgemäßen Metallbauteil derart verbunden, dass die oberen Verankerungselemente 3 in Z-Achsenrichtung in die Faserstruktur des oberen Fügepartners 7 eingreifen und so eine optimale Klebeverankerung ermöglichen. Dabei ist im vorliegenden Ausführungsbeispiel die Faserstruktur des oberen Fügepartners 7 eine Kohlenstofffaserstruktur, die entweder in einem Nassklebeverfahren mittels Epoxyharz oder mittels einem Klebefilms (film adhäsive) mit dem als Verstärkungselement verwendeten Metallbauteil 1 verbunden wird. Nach entsprechendem Aushärten unter Vakuum in einem Autoklaven, erfolgt die Verbindung mit dem unteren Fügepartner 9, der ebenfalls eine Kohlenstofffaserstruktur ist, die entweder in einem Nassklebeverfahren mittels Epoxyharz oder mittels einem Klebefilms mit dem als Verstärkungselement verwendeten Metallbauteil 1 zu einer Verbundstruktur 9 verbunden wird.

Das multidimensional strukturierte Metallbauteil 1 ermöglicht eine deutlich gegenüber herkömmlichen Verstärkungen verbesserte Z-Verstärkung von faserverstärkten Polymerlaminaten. Hierdurch kann der Delaminationswiderstand auf 2 kJ/m² erhöht werden.

### Bezugszeichenliste

- 1: Metallbauteil
- 2: Unteres Verankerungselement
- 3: Oberes Verankerungselement
- 4: Unterer Verbindungsabschnitt
- 5: Oberer Verbindungsabschnitt
- 6: Aussparung
- 7: Oberer Fügepartner
- 8: Unterer Fügepartner
- 9: Verbundstruktur

## Patentansprüche

1. Verfahren zum multidimensionalen Strukturieren von zumindest einem Verbindungsabschnitt eines Metallbauteils, wobei der Verbindungsabschnitt zu einer adhäsiven Verbindung mit faserverstärktem Polymerlaminat vorgesehen ist, und wobei das Verfahren folgende Schritte aufweist:
Erzeugen einer milliskalierten Struktur, d. h. einer Makrostruktur mit Dimensionen größer 1000µm, durch Ausbilden von im Wesentlichen senkrecht oder in einem vorbestimmten Winkel hervorstehenden Verankerungselementen an dem Verbindungsabschnitt mittels Stanzbiegen, Hochgeschwindigkeits-Metallzerspanen, Elektronenstrahlbearbeitung, Additiv-Schicht-Herstellung, Auftragsschweißen oder Anschweißen;
Erzeugen einer mikroskalierten Struktur, d. h. einer Mikrostruktur mit Dimensionen zwischen 1µm und 1000µm, auf dem Verbindungsabschnitt und den Verankerungselementen mittels Sandstrahlen oder elektromagnetischer Strahlung;
Erzeugen einer nanoskalierten Struktur, d. h. einer Nanostruktur mit Dimensionen kleiner 1µm, über der mikroskalierten Struktur auf dem Verbindungsabschnitt und den Verankerungselementen.

2. Verfahren nach Anspruch 1, wobei das Erzeugen der mikroskalierten Struktur auf dem Verbindungsabschnitt und den Verankerungselementen mittels Laserbestrahlung erfolgt.

3. Verfahren nach Anspruch 1 oder 2, wobei das Erzeugen einer nanoskalierten Struktur über der mikroskalierten Struktur auf dem Verbindungsabschnitt und den Z-Verankerungselementen mittels Laserbestrahlen oder Anodisieren erfolgt.

4. Verfahren nach Anspruch 2 oder 3, wobei die Laserbestrahlung mittels einem Kurzpulslaser, insbesondere einem Femto-, Piko- oder Nanosekunden-Laser mit einer hohen Pulsfolgenfrequenz erfolgt, der mit einem definierten Vorschub relativ zu dem Verbindungsabschnitt verfahren wird.

5. Verfahren nach einem der Ansprüche 2 bis 4, wobei der Laser zum Erzeugen der mikroskalierten Struktur und der Laser zum Erzeugen der nanoskalierten Struktur derart hintereinander angeordnet sind, dass die Nanostruktur überlagerte Mikrostruktur in einem Vorschub-Durchlauf erzeugt wird.

6. Metallbauteil mit zumindest einem multidimensional strukturieren Verbindungsabschnitt, wobei der Verbindungsabschnitt zu einer adhäsiven Verbindung mit faserverstärktem Polymerlaminat vorgesehen ist, und wobei das Metallbauteil eine milliskalierte Struktur, d. h. einer Makrostruktur mit Dimensionen größer 1000µm, ausgebildet durch mittels Stanzbiegen, Hochgeschwindigkeits-Metallzerspanen, Elektronenstrahlbearbeitung, Additiv-Schicht-Herstellung, Auftragsschweißen oder Anschweißen erzeugte, im Wesentlichen senkrecht oder in einem vorbestimmten Winkel hervorstehende Verankerungselemente, und eine mittels Sandstrahlen oder elektromagnetischer Strahlung hergestellte mikroskalierte Struktur, d. h. einer Mikrostruktur mit Dimensionen zwischen 1µm und 1000µm, auf dem Verbindungsabschnitt und den Verankerungselementen aufweist, die von einer weiteren nanoskalierten Struktur, d. h. einer Nanostruktur mit Dimensionen kleiner 1µm, überlagert ist.

7. Metallbauteil nach Anspruch 6, wobei allseitig Verbindungsabschnitte vorgesehen sind.

8. Metallbauteil nach Anspruch 6 oder 7, wobei das Bauteil aus einer Titan-, Aluminium-, Stahl-, Magnesium-Legierung oder einer anderen Metalllegierung hergestellt ist.

9. Verwendung eines Metallbauteils nach einem der Ansprüche 6 bis 8 als Z-Verstärkung von faserverstärkten Polymerlaminaten.

10. Verwendung eines Metallbauteils nach einem der Ansprüche 6 bis 8 als Verbindungselement in einem Co-Bonding-Verfahren.

## Claims

1. Process for the multidimensional structuring of at least one connecting portion of a metal component, the connecting portion being intended for adhesive bonding with fibre-reinforced polymer laminate, and the process comprising the following steps:
provision of a milliscale structure, i.e. a macrostructure with dimensions greater than 1000 µm, by providing anchoring elements by means of stamping and bending, high-speed metal machining, electron beam processing, additive layer manufacturing, deposition welding or welding which are substantially perpendicular to or project at a predetermined angle from the connecting portion;
provision of a microscale structure, i.e. a microstructure with dimensions of between 1 µm and 1000 µm, on the connecting portion and the anchoring elements by means of sandblasting or electromagnetic radiation;
provision of a nanoscale structure, i.e. a nanostructure with dimensions of less than 1 µm above the microscale structure on the connecting portion and the anchoring elements.

2. Process according to claim 1, wherein the production of a microscale structure on the connecting portion and the anchoring elements takes place by means of laser irradiation.

3. Process according to claim 1 or claim 2, wherein the production of a nanoscale structure above the microscale structure on the connecting portion and the Z anchoring elements takes place by means of laser irradiation or anodizing.

4. Process according to claim 2 or claim 3, wherein laser irradiation takes place by means of a short-pulse laser, particularly a femtosecond, picosecond or nanosecond laser with a high pulse repetition frequency, which is operated with a defined feed motion to the connecting portion.

5. Process according to any one of claims 2 to 4, wherein the laser for producing the microscale structure and the laser for producing the nanoscale structure are arranged in tandem such that the microstructure on which the nanostructure is superimposed is produced in one feed motion cyle.

6. Metal component with at least one multidimensionally structured connecting portion, wherein the connecting portion is intended for adhesive bonding with fibre-reinforced polymer laminate and the metal component comprises a milliscale structure, i.e. a macrostructure with dimensions greater than 1000 µm, by providing anchoring elements by means of stamping and bending, high-speed metal machining, electron beam processing, additive layer manufacturing, deposition welding or welding which are substantially perpendicular to or project at a predetermined angle from the connecting portion, and a microscale structure produced by means of sandblasting or electromagnetic radiation, i.e. a microstructure with dimensions of between 1 µm and 1000 µm, on the connecting portion and the anchoring elements, which is overlaid by a further nanoscale structure, i.e. a nanostructure with dimensions of less than 1 µm.

7. Metal component according to claim 6, wherein connecting portions are provided on all sides.

8. Metal component according to claim 6 or claim 7, wherein the component is manufactured from a titanium, aluminium, steel, magnesium alloy or another metal alloy.

9. Use of a metal component according to any one of claims 6 to 8 as a Z reinforcement for fibre-reinforced polymer laminates.

10. Use of a metal component according to any one of claims 6 to 8 as a connecting element in a co-bonding process.

## Revendications

1. Procédé pour la structuration multidimensionnelle d'au moins une section de liaison d'un élément métallique, la section de liaison étant ménagée pour une liaison adhésive avec du stratifié polymère renforcé par fibre, et le procédé présentant les étapes suivantes :
création d'une structure à milli-échelle, c'est-à-dire d'une macrostructure ayant des dimensions supérieures à 1000 µm, par réalisation sur la section de liaison d'éléments d'ancrage faisant essentiellement saillie de manière verticale ou selon un angle prédéterminé, par pliage à la presse, découpe de métaux à haute vitesse, traitement par faisceau d'électrons, fabrication de couche d'additif, soudure par rechargement ou soudage ;
création d'une structure à micro-échelle, c'est-à-dire d'une microstructure ayant des dimensions comprises entre 1 µm et 1000 µm, sur la section de liaison et sur les éléments d'ancrage, par sablage ou rayonnement électromagnétique ;
création d'une structure à nano-échelle, c'est-à-dire d'une nanostructure ayant des dimensions inférieures à 1 µm, sur la section de liaison et sur les éléments d'ancrage, au-dessus de la structure à micro-échelle.

2. Procédé selon la revendication 1, dans lequel la création de la structure à micro-échelle sur la section de liaison et sur les éléments d'ancrage est réalisée par rayonnement laser.

3. Procédé selon la revendication 1 ou 2, dans lequel la création d'une structure à nano-échelle sur la section de liaison et sur les éléments d'ancrage en Z, au-dessus de la structure à micro-échelle, est réalisée par rayonnement laser ou anodisation.

4. Procédé selon la revendication 2 ou 3, dans lequel le rayonnement laser est réalisé au moyen d'un laser à impulsion courte, notamment d'un laser femtoseconde, d'un laser picoseonde ou d'un laser nanoseconde ayant une fréquence de succession d'impulsions élevée, qui est déplacé avec un avancement défini par rapport à la section de liaison.

5. Procédé selon l'une quelconque des revendications 2 à 4, dans lequel le laser destiné à créer la structure à micro-échelle et le laser destiné à créer la structure à nano-échelle sont disposés l'un derrière l'autre de manière à ce que la micro-structure recouverte par la nano-structure soit générée dans un cycle d'avancement.

6. Élément métallique comprenant au moins une section de liaison structurée de manière multidimensionnelle, dans lequel la section de liaison est ménagée pour une liaison adhésive à l'aide de stratifié polymère renforcé par fibre, et dans lequel l'élément métallique présente sur la section de liaison et sur les éléments d'ancrage une structure à milli-échelle, c'est-à-dire une macrostructure ayant des dimensions supérieures à 1000 µm, réalisée par pliage à la presse, découpe de métaux à haute vitesse, traitement par faisceau d'électrons, fabrication de couche d'additif, rechargement par soudure ou soudage, des éléments d'ancrage faisant saillie essentiellement verticalement ou dans un angle prédéterminé, et une structure à micro-échelle fabriquée par sablage ou rayonnement électromagnétique, c'est-à-dire une micro-structure ayant des dimensions comprises entre 1 µm et 1000 µm, laquelle est recouverte par une structure supplémentaire à nano-échelle, c'est-à-dire une nanostructure ayant des dimensions inférieures à 1 µm.

7. Élément métallique selon la revendication 6, dans lequel des sections de liaison sont ménagées sur tous les côtés.

8. Élément métallique selon la revendication 6 ou 7, dans lequel l'élément est fabriqué à partir d'un alliage de titane, d'un alliage d'aluminium, d'un alliage d'acier, d'un alliage de magnésium ou d'un autre alliage métallique.

9. Utilisation d'un élément métallique selon l'une quelconque des revendications 6 à 8, en tant que renforcement en Z de stratifiés polymères renforcés par fibre.

10. Utilisation d'un élément métallique selon l'une quelconque des revendications 6 à 8, en tant qu'élément de liaison dans un procédé de co-bonding.
